# EUROPÄISCHE PATENTSCHRIFT

(11) **EP 3 595 862 B1**
(45) Veröffentlichungstag und Bekanntmachung des Hinweises auf die Patenterteilung: **07.06.2023**
(21) Anmeldenummer: 18703783.3
(22) Anmeldetag: 07.02.2018
(51) Int. Cl.: B29C 48/09, B29C 48/13, B29C 48/17, B29C 48/19, B29C 48/20, B29C 48/21, B29C 48/25, B29C 48/32, B29C 48/49, B29C 48/695

(54) **MEHRKOMPONENTEN-EXTRUSIONSSPRITZKOPF, MEHRKOMPONENTEN-EXTRUSIONSANLAGE UND VERFAHREN ZUM HERSTELLEN EINES VERBUNDSCHLAUCHS**
MULTI-COMPONENT EXTRUSION SPRAY HEAD, MULTI-COMPONENT EXTRUSION SYSTEM AND METHOD FOR PRODUCING A COMPOSITE TUBE
TÊTE D'EXTRUSION À PLUSIEURS COMPOSANTS, INSTALLATION D'EXTRUSION À PLUSIEURS COMPOSANTS ET PROCÉDÉ POUR LA FABRICATION D'UN TUYAU FLEXIBLE COMPOSITE

(30) Priorität: 17.03.2017 DE 102017105807
(43) Veröffentlichungstag der Anmeldung: 22.01.2020
(73) Patentinhaber: Delfingen FR-Anteuil S.A., 25340 Anteuil (FR)
(72) Erfinder: RAUSCH, Hubert, 97486 Königsberg (DE)
(74) Vertreter: Horn Kleimann Waitzhofer Patentanwälte PartG mbB
(86) Internationale Anmeldenummer: PCT/EP2018/053099
(87) Internationale Veröffentlichungsnummer: WO 2018/166722

(56) Entgegenhaltungen:
- EP-A1- 1 459 866
- WO-A1-02/087048
- DE-A1-102014 108 757
- DE-A1-102015 104 256
- US-A- 5 036 210
- US-A1- 2005 260 374

## Beschreibung

Die vorliegende Erfindung betrifft einen Mehrkomponenten-Extrusionsspritzkopf, eine Mehrkomponenten-Extrusionsanlage mit einem derartigen Mehrkomponenten-Extrusionsspritzkopf und ein Verfahren zum Herstellen eines Verbundschlauchs.

Wellschläuche oder Wellrohre können insbesondere im Automobilbau als Schutzrohre für Kabel, wie beispielsweise elektrische Leitungen, eingesetzt werden. Hierbei werden die Kabel zur Montage in den Wellschlauch eingezogen, eingeschoben oder eingelegt.

Die DE 10 2015 104 256 A1 beschreibt ein Wellrohr aus Kunststoff zum Ummanteln von Leitungen. Das Wellrohr umfasst entlang seines Außenumfangs eine Wellung mit radial vorragenden Bereichen und mit bezüglich der radial vorragenden Bereiche nach innen versetzt liegenden Bereichen. Die radial vorragenden Bereiche bestehen dabei aus einem härteren Kunststoffmaterial als die radial nach innen versetzten Bereiche. Mit Hilfe des weicheren Kunststoffmaterials kann die Flexibilität des Wellrohrs eingestellt werden und mit Hilfe des härteren Kunststoffmaterials können die Verschleißeigenschaften desselben eingestellt werden.

Die US 2005/0260374 A1 zeigt einen Extrusionskopf zum Bilden eines Endloskunststoffprodukts. Der Extrusionskopf umfasst einen Extrusionsdorn und eine Düse. Mindestens ein Rohr, durch das Luft oder ein anderes Material zugeführt werden kann, ist radial durch eine Öffnung in der Düse geführt, um den Polymerfluss in einem ringförmigen Bereich zwischen dem Extrusionsdorn und der Düse aufzuteilen und die Luft oder das andere Material in den Polymerfluss einzubringen.

Um unterschiedliche Kunststoffmaterialien einsetzen zu können, ist es erforderlich, eine Mehrkomponenten-Extrusionsanlage einzusetzen. Bei derartigen Mehrkomponenten-Extrusionsanlagen werden die beiden sich unterscheidenden Kunststoffmaterialien in einem Grundspritzkopf der Mehrkomponenten-Extrusionsanlage zusammengeführt.

Vor diesem Hintergrund besteht eine Aufgabe der vorliegenden Erfindung darin, einen verbesserten Mehrkomponenten-Extrusionsspritzkopf zur Verfügung zu stellen.

Demgemäß wird ein Mehrkomponenten-Extrusionsspritzkopf zum Herstellen eines Verbundschlauchs vorgeschlagen. Der Mehrkomponenten-Extrusionsspritzkopf umfasst eine Extrusionsdüse, einen Grundspritzkopf, der dazu eingerichtet ist, der Extrusionsdüse einen ersten Schmelzestrom und einen zweiten Schmelzestrom zuzuführen, wobei der erste Schmelzestrom und der zweite Schmelzestrom in einer Förderrichtung, die von dem Grundspritzkopf weg in Richtung eines Düsenaustritts der Extrusionsdüse orientiert ist, getrennt voneinander in der Extrusionsdüse geführt sind, und eine in der Extrusionsdüse und außerhalb des Grundspritzkopfs angeordnete Schmelzestromverteileinrichtung, die dazu eingerichtet ist, den ersten Schmelzestrom in einer Umfangsrichtung derselben aufzuteilen, und die dazu eingerichtet ist, den zweiten Schmelzestrom dem aufgeteilten ersten Schmelzestrom derart zuzuführen, dass zumindest ein Abschnitt des zweiten Schmelzestroms in der Umfangsrichtung innerhalb des ersten Schmelzestroms angeordnet ist. Dabei ist die Schmelzestromverteileinrichtung in oder an dem Düsenaustritt angeordnet.

Dadurch, dass die Schmelzestromverteileinrichtung nicht innerhalb des Grundspritzkopfs angeordnet ist, kann diese besonders schnell und einfach ausgetauscht werden. Mit Hilfe der Schmelzestromverteileinrichtung ergibt sich eine optimale Materialführung und eine optimale Materialverteilung. Es ergeben sich kurze Verweilzeiten der verwendeten Kunststoffmaterialien in dem Mehrkomponenten-Extrusionsspritzkopf. Durch den einfachen Austausch der Schmelzestromverteileinrichtung ergeben sich vielfältige Möglichkeiten, mehrere Kunststoffmaterialien axial zu extrudieren.

Insbesondere ist die Schmelzestromverteileinrichtung beabstandet von dem Grundspritzkopf angeordnet. Der Mehrkomponenten-Extrusionsspritzkopf kann beispielsweise ein Zweikomponenten-Extrusionsspritzkopf oder ein Dreikomponenten-Extrusionsspritzkopf sein. Insbesondere ist der Mehrkomponenten-Extrusionsspritzkopf zum Herstellen eines Wellschlauchs oder Wellrohrs geeignet. Hierzu kann dem Düsenaustritt in der Förderrichtung betrachtet ein Corrugator nachgeschaltet sein. Der Mehrkomponenten-Extrusionsspritzkopf kann jedoch auch zum Herstellen eines Glattschlauchs, Glattrohrs oder beliebiger anderer Profile geeignet sein.

Der erste Schmelzestrom wird mit einem ersten Kunststoffmaterial gebildet und der zweite Schmelzestrom mit einem zweiten Kunststoffmaterial gebildet. Das erste Kunststoffmaterial kann auch als Hauptkomponente und das zweite Kunststoffmaterial kann auch als Nebenkomponente Bezeichnet werden. Das erste Kunststoffmaterial und das zweite Kunststoffmaterial unterscheiden sich voneinander. Beispielsweise unterscheiden sich das erste Kunststoffmaterial und das zweite Kunststoffmaterial chemisch voneinander. Alternativ können das erste Kunststoffmaterial und das zweite Kunststoffmaterial auch lediglich unterschiedliche Farben aufweisen. Mit Hilfe des Mehrkomponenten-Extrusionsspritzkopfs können auch mehr als zwei unterschiedliche Kunststoffmaterialien verarbeitet werden. Beispielsweise kann dann der Grundspritzkopf geeignet sein, der Extrusionsdüse einen ersten Schmelzestrom, einen zweiten Schmelzestrom und einen dritten Schmelzestrom zuzuführen. Die Anzahl der verwendeten Kunststoffmaterialien und damit der Schmelzeströme ist nicht begrenzt.

Die Extrusionsdüse umfasst vorzugsweise eine Außendüse und eine innerhalb der Außendüse angeordnete Innendüse. Die Außendüse und die Innendüse sind rotationssymmetrisch zu einer Symmetrieachse ausgebildet. Die Außendüse kann mit einem Düsenhalter des Grundspritzkopfs verbunden sein. Beispielsweise kann die Außendüse in den Düsenhalter eingeschraubt sein. Die Innendüse ist vorzugsweise mit Hilfe eines Befestigungselements, eines Befestigungsstabs und der Schmelzestromverteileinrichtung mit dem Grundspritzkopf verschraubt. Der erste Schmelzestrom ist bevorzugt zwischen der Außendüse und der Innendüse geführt und der zweite Schmelzestrom ist bevorzugt zwischen der Innendüse und dem Befestigungsstab geführt.

Der Grundspritzkopf umfasst bevorzugt einen Basiskörper, in dem eine rotationssymmetrische Bohrung vorgesehen ist. In der Bohrung kann ein sogenannter Torpedo angeordnet sein. Der Torpedo umfasst einen kegelförmigen Schmelzeteiler, der dazu eingerichtet ist, den ersten Schmelzestrom aufzuteilen und der Au-βendüse zuzuführen. Der Torpedo umfasst weiterhin eine Verteilerplatte, mit deren Hilfe der der zweite Schmelzestrom der Innendüse zugeführt wird. Das heißt, der zweite Schmelzestrom wird in der Förderrichtung innerhalb des ersten Schmelzestroms in Richtung der Schmelzestromverteileinrichtung geführt.

Darunter, dass der erste Schmelzestrom in der Umfangsrichtung desselben aufgeteilt wird, ist zu verstehen, dass dieser zumindest mit einem in der Förderrichtung verlaufenden Schlitz geteilt wird. Das heißt, der erste Schmelzestrom ist dann umfänglich nicht geschlossen. In den Schlitz des ersten Schmelzestroms wird innerhalb der Extrusionsdüse und unmittelbar vor dem Düsenaustritt mit Hilfe der Schmelzestromverteileinrichtung der Abschnitt des zweiten Schmelzestroms eindosiert. Das heißt, der in dem ersten Schmelzestrom vorgesehene Schlitz wird sofort mit Hilfe des Abschnitts des zweiten Schmelzestroms geschlossen.

Vorzugsweise wird der erste Schmelzestrom mit Hilfe der Schmelzestromverteileinrichtung in eine Vielzahl an Abschnitten unterteilt. Insbesondere ist dann in der Umfangsrichtung betrachtet immer ein Abschnitt des zweiten Schmelzestroms zwischen zwei Abschnitt des ersten Schmelzestroms und umgekehrt angeordnet. Darunter, dass der Abschnitt des zweiten Schmelzestroms in der Umfangsrichtung des ersten Schmelzestroms innerhalb des ersten Schmelzestroms angeordnet ist, ist zu verstehen, dass beidseits des Abschnitts des zweiten Schmelzestroms der geteilte erste Schmelzestrom angeordnet ist. Die Schmelzeströme sind in einer Radialrichtung des ersten Schmelzestroms betrachtet insbesondere nicht übereinander, sondern in der Umfangsrichtung des ersten Schmelzestroms betrachtet nebeneinander und parallel zueinander positioniert. Das heißt, in der Radialrichtung betrachtet ist der zweite Schmelzestrom insbesondere außerhalb des ersten Schmelzestroms und/oder umgekehrt angeordnet. Insbesondere vermischen sich der erste Schmelzestrom und der zweite Schmelzestrom nicht.

Die Schmelzestromverteileinrichtung ist in oder an dem Düsenaustritt angeordnet.

Das heißt, die Schmelzestromverteileinrichtung kann beliebig weit weg von dem Grundspritzkopf angeordnet sein. Hierdurch ist die Schmelzestromverteileinrichtung besonders einfach austauschbar.

Gemäß einer weiteren Ausführungsform schließt eine Vorderseite der Schmelzestromverteileinrichtung bündig mit dem Düsenaustritt ab.

Vorzugsweise ist die Vorderseite der Schmelzestromverteileinrichtung Teil des Düsenausgangs. Die Vorderseite ist dem Grundspritzkopf abgewandt angeordnet. Insbesondere ist die Schmelzestromverteileinrichtung innerhalb der Außendüse positioniert.

Gemäß einer weiteren Ausführungsform ist in der Schmelzestromverteileinrichtung ein von dem Düsenaustritt erreichbares Befestigungselement vorgesehen, wobei die Schmelzestromverteileinrichtung nach einem Lösen des Befestigungselements aus der Extrusionsdüse entnehmbar ist.

Die Schmelzestromverteileinrichtung umfasst vorzugsweise einen rotationssymmetrisch zu einer Symmetrieachse aufgebauten Basiskörper, in dem ein Aufnahmebereich in Form einer Bohrung vorgesehen ist. In dem Aufnahmebereich ist das Befestigungselement aufnehmbar. Das Befestigungselement kann beispielsweise ein Innengewinde aufweisen, das korrespondierend zu einem Außengewinde des Befestigungsstabs ausgebildet ist. Das Befestigungselement kann weiterhin einen Befestigungsabschnitt aufweisen. Der Befestigungsabschnitt kann beispielsweise ein Innensechskant sein. Hierdurch kann die Schmelzestromverteileinrichtung einfach und schnell ausgetauscht werden. Zum Demontieren und Montieren der Schmelzestromverteileinrichtung ist ein Demontieren des Grundspritzkopfs nicht erforderlich.

Gemäß einer weiteren Ausführungsform ist die Schmelzestromverteileinrichtung mit Hilfe des Befestigungselements und eines durch die Extrusionsdüse hindurchgeführten Befestigungsstabs mit dem Grundspritzkopf verspannt.

Der Befestigungsstab ist vorzugsweise in die Verteilerplatte des Torpedos des Grundspritzkopfs eingeschraubt. Der zweite Schmelzestrom ist zwischen dem Befestigungsstab und der Innendüse geführt. Vorzugsweise umfasst die Schmelzestromverteileinrichtung in ihrem Basiskörper eine zentrische Bohrung, in der der Befestigungsstab aufgenommen ist.

Gemäß einer weiteren Ausführungsform weist die Schmelzestromverteileinrichtung zumindest einen Schmelzeteiler auf, der dazu eingerichtet ist, den ersten Schmelzestrom in der Umfangsrichtung desselben aufzuteilen.

Die Anzahl der Schmelzeteiler ist beliebig. Beispielsweise können zwölf Schmelzeteiler vorgesehen sein. Es können auch nur einer, zwei, drei oder beliebig viele Schmelzeteiler vorgesehen sein. Vorzugsweise ist eine Vielzahl an Schmelzteilern vorgesehen, die den ersten Schmelzestrom in eine Vielzahl an Abschnitten unterteilen. Die Schmelzeteiler können auch als Inseln bezeichnet werden. Die Schmelzeteiler kontaktieren die Außendüse innenseitig.

Gemäß einer weiteren Ausführungsform weist der zumindest eine Schmelzeteiler eine Vorderkante sowie zwei ausgehend von der Vorderkante sich in der Förderrichtung voneinander weg erstreckende Seitenwände auf.

Die Seitenwände sind vorzugsweise V-förmig angeordnet. Die Seitenwände können gerade sein. Alternativ können die Seitenwände auch bogenförmig geschwungen sein. Mit Hilfe der Vorderkante und der Seitenwände wird der erste Schmelzestrom geteilt. Dabei beginnt die Teilung des ersten Schmelzestroms an der Vorderkante. Die schräg angeordneten Seitenwände führen den ersten Schmelzestrom so weit auseinander, dass der Abschnitt des zweiten Schmelzestroms innerhalb des aufgespaltenen ersten Schmelzestroms platziert werden kann. Die Vorderkante ist bevorzugt senkrecht zu einer Symmetrieachse der Schmelzestromverteileinrichtung positioniert. Die Vorderkante kann jedoch auch relativ zu der Symmetrieachse geneigt positioniert sein.

Gemäß einer weiteren Ausführungsform weist der zumindest eine Schmelzeteiler eine bogenförmig, insbesondere kreisbogenförmig, ausgebildete Rückwand auf.

Das heißt, die Rückwand ist gekrümmt. Die Rückwand ist in der Förderrichtung betrachtet stromabwärts der Vorderkante angeordnet. Die Rückwand kann auch eben oder V-förmig ausgebildet sein. Zwischen der Rückwand und den schräg angeordneten Seitenwänden sind vorzugsweise zwei parallel zueinander positionierte weitere Seitenwände angeordnet. Die Rückwand ist insbesondere zylinderförmig. Der zumindest eine Schmelzeteiler weist vorzugsweise auch eine kreisbogenförmig gekrümmte Außenfläche auf. Mit dieser Außenfläche kann der zumindest eine Schmelzeteiler innenseitig an der Außendüse anliegen. Das heißt, zwischen der Außenfläche des Schmelzeteilers und der Außendüse kann der erste Schmelzestrom bevorzugt nicht vorbeiströmen.

Gemäß einer weiteren Ausführungsform weist die Schmelzestromverteileinrichtung zumindest eine Bohrung auf, die dazu eingerichtet ist, den zweiten Schmelzestrom dem aufgeteilten ersten Schmelzestrom zuzuführen.

Die zumindest eine Bohrung kann auch als Kanal bezeichnet werden oder ein Kanal sein. Insbesondere ist die zumindest eine Bohrung schräg angeordnet. Beispielsweise ist die zumindest eine Bohrung in einem Neigungswinkel von 30° bis 50°, bevorzugt 35° bis 45°, weiter bevorzugt von 40° relativ zu der Symmetrieachse der Schmelzestromverteileinrichtung positioniert. Vorzugsweise ist eine Vielzahl an Bohrungen vorgesehen, die gleichmäßig um einen Umfang der Schmelzestromverteileinrichtung verteilt angeordnet sind. Insbesondere ist jedem Schmelzeteiler eine derartige Bohrung zugeordnet. Mit Hilfe der Bohrungen wird der zweite Schmelzestrom dem ersten Schmelzestrom zugeführt. Die Bohrungen sind ausgehend von einem kegelstumpfförmigen Schmelzewegführabschnitt des Basiskörpers der Schmelzestromverteileinrichtung in Richtung einer Außenfläche des Basiskörpers orientiert.

Gemäß einer weiteren Ausführungsform ist die zumindest eine Bohrung zumindest abschnittsweise durch den zumindest einen Schmelzeteiler hindurchgeführt.

Vorzugsweise durchbricht die zumindest eine Bohrung den zumindest einen Schmelzeteiler. Insbesondere durchbricht die Bohrung die Rückseite des zumindest einen Schmelzeteilers. Hierdurch kann der Abschnitt des zweiten Schmelzestroms dem ersten Schmelzestrom unmittelbar nach dem zumindest einen Schmelzeteiler zugeführt werden. Hierdurch wird eine Vermischung des ersten Schmelzestroms und des zweiten Schmelzestroms zuverlässig verhindert.

Ferner wird eine Mehrkomponenten-Extrusionsanlage mit einem derartigen Mehrkomponenten-Extrusionsspritzkopf, einem Hauptextruder zum Zuführen des ersten Schmelzestroms zu dem Grundspritzkopf und einem Beispritzextruder zum Zuführen des zweiten Schmelzestroms zu dem Grundspritzkopf vorgeschlagen.

Die Mehrkomponenten-Extrusionsanlage kann eine Vielzahl an Beispritzextrudern aufweisen. Beispielsweise kann mit jedem Beispritzextruder dem Grundspritzkopf ein unterschiedliches Kunststoffmaterial zugeführt werden. Die Mehrkomponenten-Extrusionsanlage kann den zuvor schon erwähnten Corrugator umfassen.

Weiterhin wird ein Verfahren zum Herstellen eines Verbundschlauchs mit Hilfe eines Mehrkomponenten-Extrusionsspritzkopfs vorgeschlagen. Das Verfahren umfasst die folgenden Schritte: Zuführen eines ersten Schmelzestroms und eines zweiten Schmelzestroms zu einer Extrusionsdüse mit Hilfe eines Grundspritzkopfs, voneinander getrenntes Führen des ersten Schmelzestroms und des zweiten Schmelzestroms in einer Förderrichtung, die von dem Grundspritzkopf weg in Richtung eines Düsenaustritts der Extrusionsdüse orientiert ist, in der Extrusionsdüse, Aufteilen des ersten Schmelzestroms in einer Umfangsrichtung desselben mit Hilfe einer in der Extrusionsdüse und außerhalb des Grundspritzkopfs angeordneten Schmelzestromverteileinrichtung, wobei die Schmelzestromverteileinrichtung in oder an dem Düsenaustritt angeordnet ist, und Zuführen des zweiten Schmelzestroms dem aufgeteilten ersten Schmelzestrom mit Hilfe der Schmelzestromverteileinrichtung derart, dass zumindest ein Abschnitt des zweiten Schmelzestroms in der Umfangsrichtung innerhalb des ersten Schmelzestroms angeordnet wird.

Darunter, dass der zumindest eine Abschnitt des zweiten Schmelzestroms in der Umfangsrichtung innerhalb des ersten Schmelzestroms angeordnet wird, ist zu verstehen, dass der zumindest eine Abschnitt des zweiten Schmelzestroms in der Umfangsrichtung betrachtet beidseitig von dem ersten Schmelzestrom eingeschlossen ist. In der Radialrichtung des ersten Schmelzestroms betrachtet sind der erste Schmelzestrom und der zweiten Schmelzestrom insbesondere nicht übereinander positioniert. Das heißt insbesondere, dass in der Radialrichtung betrachtet der Abschnitt des zweiten Schmelzestroms außerhalb des ersten Schmelzestroms angeordnet wird. Das Aufteilen des ersten Schmelzestroms und das Zuführen des zweiten Schmelzestroms zu dem ersten Schmelzestrom können gleichzeitig erfolgen. Der erste Schmelzestrom wird dem Grundspritzkopf beispielsweise mit Hilfe des Hauptextruders zugeführt und der zweite Schmelzestrom kann dem Grundspritzkopf mit Hilfe des Beispritzextruders zugeführt werden. Der erste Schmelzestrom umfasst das erste Kunststoffmaterial und der zweite Schmelzestrom umfasst das zweite Kunststoffmaterial. Beispielsweise ist das zweite Kunststoffmaterial weicher als das erste Kunststoffmaterial.

Gemäß einer Ausführungsform wird der zumindest eine Abschnitt des zweiten Schmelzestroms in der Umfangsrichtung zwischen zwei Abschnitten des ersten Schmelzestroms angeordnet.

Vorzugsweise sind zumindest zwei Schmelzeteiler vorgesehen, die dazu eingerichtet sind, den ersten Schmelzestrom in zwei Abschnitte aufzuteilen, zwischen denen jeweils ein Abschnitt des zweiten Schmelzestroms angeordnet wird. Die Anzahl der Schmelzeteiler ist jedoch beliebig. Vorzugsweise sind mehr als zwei Schmelzeteiler vorgesehen. Beispielsweise können zwölf Schmelzeteiler vorgsehen sein, die den ersten Schmelzestrom in zwölf Abschnitte aufteilen. Bevorzugt werden dann immer ein Abschnitt des ersten Schmelzestroms und ein Abschnitt des zweiten Schmelzestroms in der Umfangsrichtung abwechselnd nebeneinander angeordnet.

Gemäß einer weiteren Ausführungsform weist der erste Schmelzestrom eine Vielzahl an Abschnitten und der zweite Schmelzestrom eine Vielzahl an Abschnitten auf, wobei die Abschnitte des ersten Schmelzestroms und die Abschnitte des zweiten Schmelzestroms in der Umfangsrichtung so abwechselnd angeordnet werden, dass immer ein Abschnitt des ersten Schmelzestroms zwischen zwei Abschnitten des zweiten Schmelzestroms und umgekehrt angeordnet wird.

Die Anzahl der Abschnitte des ersten Schmelzestroms und die Anzahl der Abschnitte des zweiten Schmelzestroms sind beliebig. Vorzugsweise entspricht die Anzahl der Abschnitte des ersten Schmelzestroms der Anzahl der Abschnitte des zweiten Schmelzestroms.

Gemäß einer weiteren Ausführungsform wird der erste Schmelzestrom so geteilt und der zweite Schmelzestrom dem geteilten ersten Schmelzestrom derart zugeführt, dass sich die Abschnitte des ersten Schmelzestroms und des zweiten Schmelzestroms in einer Radialrichtung des Verbundschlauchs jeweils über eine gesamte Wandstärke desselben erstrecken.

Hierunter ist zu verstehen, dass in der Radialrichtung betrachtet die Abschnitte des ersten Schmelzestroms und die Abschnitte des zweiten Schmelzestroms nicht übereinander angeordnet sind. Insbesondere sind die Abschnitte des ersten Schmelzestroms frei von dem zweiten Kunststoffmaterial des zweiten Schmelzestroms und die Abschnitte des zweiten Schmelzestroms sind frei von dem ersten Kunststoffmaterial des ersten Schmelzestroms.

Weitere mögliche Implementierungen des Mehrkomponenten-Extrusionsspritzkopfs, der Mehrkomponenten-Extrusionsanlage und/oder des Verfahrens umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Mehrkomponenten-Extrusionsspritzkopfs, der Mehrkomponenten-Extrusionsanlage und/oder des Verfahrens hinzufügen.

Weitere vorteilhafte Ausgestaltungen und Aspekte des Mehrkomponenten-Extrusionsspritzkopfs, der Mehrkomponenten-Extrusionsanlage und/oder des Verfahrens sind Gegenstand der Unteransprüche sowie der im Folgenden beschriebenen Ausführungsbeispiele des Mehrkomponenten-Extrusionsspritzkopfs, der Mehrkomponenten-Extrusionsanlage und/oder des Verfahrens. Im Weiteren werden der Mehrkomponenten-Extrusionsspritzkopf, die Mehrkomponenten-Extrusionsanlage und/oder das Verfahrens unter Bezugnahme auf die beigelegten Figuren näher erläutert.
Fig. 1 zeigt eine schematische perspektivische Ansicht einer Ausführungsform eines Verbundschlauchs;
Fig. 2 zeigt eine schematische Vorderansicht eines Kabelbaums mit einem Verbundschlauch gemäß Fig. 1;
Fig. 3 zeigt eine schematische Vorderansicht einer Ausführungsform einer Mehrkomponenten-Extrusionsanlage;
Fig. 4 zeigt eine schematische Schnittansicht der Mehrkomponenten-Extrusionsanlage gemäß der Schnittlinie IV-IV der Fig. 3;
Fig. 5 zeigt die Detailansicht V gemäß Fig. 4;
Fig. 6 zeigt die Detailansicht VI gemäß Fig. 5;
Fig. 7 zeigt eine schematische perspektivische Ansicht einer Ausführungsform einer Schmelzestromverteileinrichtung für die Mehrkomponenten-Extrusionsanlage gemäß Fig. 1;
Fig. 8 zeigt eine weitere schematische perspektivische Ansicht der Schmelzestromverteileinrichtung gemäß Fig. 7;
Fig. 9 zeigt eine schematische Seitenansicht der Schmelzestromverteileinrichtung gemäß Fig. 7;
Fig. 10 zeigt eine schematische Vorderansicht der Schmelzestromverteileinrichtung gemäß Fig. 7;
Fig. 11 zeigt eine schematische Rückansicht der Schmelzestromverteileinrichtung gemäß Fig. 7;
Fig. 12 zeigt eine schematische Schnittansicht der Schmelzestromverteileinrichtung gemäß der Schnittlinie XII-XII der Fig. 11;
Fig. 13 zeigt die Detailansicht XIII gemäß Fig. 7;
Fig. 14 zeigt die Detailansicht XIV gemäß Fig. 8;
Fig. 15 zeigt eine schematische perspektivische Ansicht einer weiteren Ausführungsform eines Verbundschlauchs; und
Fig. 16 zeigt ein schematisches Blockdiagram einer Ausführungsform eines Verfahrens zum Herstellen eines Verbundschlauchs gemäß Fig. 1 oder Fig. 15.

In den Figuren sind gleiche oder funktionsgleiche Elemente mit denselben Bezugszeichen versehen worden, sofern nichts anderen angegeben ist.

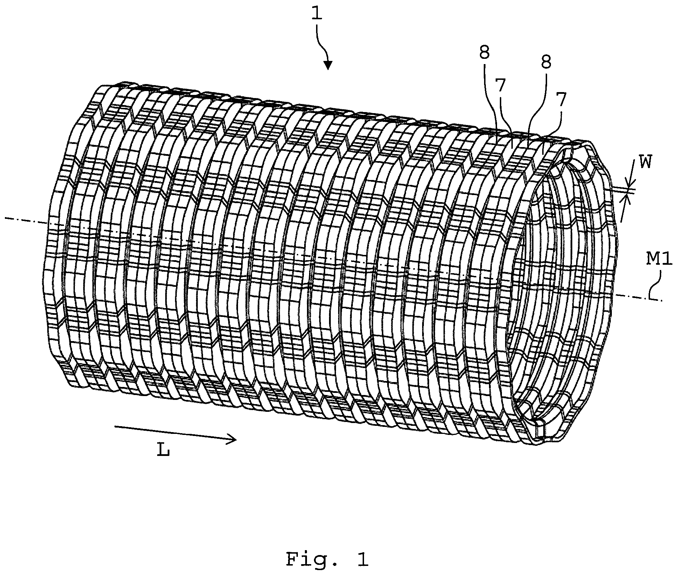

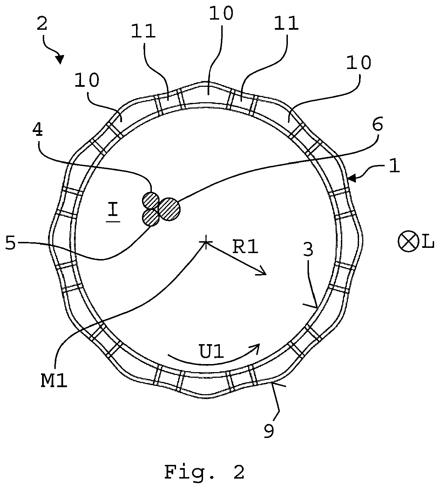

Die Fig. 1 zeigt eine schematische perspektivische Ansicht einer Ausführungsform eines Verbundschlauchs 1. Die Fig. 2 zeigt eine schematische Vorderansicht einer Ausführungsform eines Kabelbaums 2 mit einem derartigen Verbundschlauch 1. Der Verbundschlauch 1 kann auch als Verbundrohr bezeichnet werden. Der Verbundschlauch 1 wird als Verbundschlauch bezeichnet, da dieser aus miteinander verbundenen unterschiedlichen Kunststoffmaterialien gefertigt ist. Die Kunststoffmaterialien unterschieden sich bevorzugt chemisch voneinander. Der Verbundschlauch 1 ist insbesondere ein Wellschlauch oder Wellrohr beziehungsweise kann auch als Wellschlauch oder Wellrohr bezeichnet werden. Der Verbundschlauch 1 kann auch ein Glattschlauch sein.

Der Verbundschlauch 1 kann rotationssymmetrisch zu einer Mittel- oder Symmetrieachse M1 ausgebildet sein. Der Verbundschlauch 1 umfasst eine Längsrichtung L. Die Längsrichtung L ist parallel zu der Symmetrieachse M1 orientiert. Die Längsrichtung L kann in der Orientierung der Fig. 1 von links nach rechts oder von rechts nach links orientiert sein. In der Fig. 1 ist die Längsrichtung L von links nach rechts orientiert.

Der Verbundschlauch 1 umfasst weiterhin eine Radialrichtung R1, die von der Symmetrieachse M1 weg orientiert ist. Die Radialrichtung R1 ist senkrecht zu der Symmetrieachse M1 positioniert. Insbesondere ist die Radialrichtung R1 von der Symmetrieachse M1 weg auf eine Innenwandung 3 des Verbundschlauchs 1 hinzu orientiert.

Weiterhin umfasst der Verbundschlauch 1 eine Umfangsrichtung U1, die im Uhrzeigersinn oder entgegen dem Uhrzeigersinn orientiert sein kann. Wie die Fig. 2 zeigt, kann die Umfangsrichtung U1 entgegen dem Uhrzeigersinn orientiert sein. Die Umfangsrichtung U1 ist vorzugsweise parallel zu der Innenwandung 3 orientiert. Die Umfangsrichtung U1 kann auch als umfängliche Richtung des Verbundschlauchs 1 bezeichnet werden.

Der Verbundschlauch 1 ist insbesondere zur Herstellung des in der Fig. 2 gezeigten Kabelbaums 2 geeignet. Hierzu sind in dem Verbundschlauch 1, insbesondere in einem Innenraum I des Verbundschlauchs 1, eine Vielzahl an Kabeln 4 bis 6 aufgenommen. Die Kabel 4 bis 6 füllen vorzugsweise den gesamten Innenraum I aus. Die Kabel 4 bis 6 können als Leitungen bezeichnet werden. Die Anzahl der Kabel 4 bis 6 ist beliebig. Die Kabel 4 bis 6 können identische oder, wie in der Fig. 2 gezeigt, unterschiedliche Durchmesser und/oder Querschnitte aufweisen. Die Kabel 4 bis 6 bilden zusammen mit dem Verbundschlauch 1 den Kabelbaum 2.

Der Kabelbaum 2 beziehungsweise der Verbundschlauch 1 findet bevorzugt im Bereich der Kraftfahrzeugtechnik Anwendung. Der Kabelbaum 2 beziehungsweise der Verbundschlauch 1 kann allerdings auch in jedem anderen Bereich eingesetzt werden. Die Kabel 4 bis 6 können elektrische Kabel, beispielsweise einphasige Kabel, mehrphasige Kabel, Koaxialkabel oder dergleichen oder Fluidleitungen, wie beispielsweise Benzin-, Diesel-, Kerosin-, Hydraulik- oder Pneumatikleitungen sein. Die Kabel 4 bis 6 verlaufen in der Längsrichtung L.

Der Verbundschlauch 1 umfasst sich in der Längsrichtung L abwechselnde Wellentäler 7 und Wellenberge 8, von denen in der Fig. 1 jeweils nur zwei mit einem Bezugszeichen versehen sind. Die Wellentäler 7 und Wellenberge 8 sind so angeordnet, dass jeweils zwischen zwei Wellentälern 7 ein Wellenberg 8 und zwischen zwei Wellenbergen 8 ein Wellental 7 angeordnet ist. Die Wellentäler 7 und die Wellenberge 8 sind sowohl außenseitig als auch innenseitig, das heißt dem Innenraum I zugewandt, an dem Verbundschlauch 1 vorgesehen. Beispielsweise können die Wellentäler 7 und die Wellenberge 8 nach einem Extrudieren des Verbundschlauchs 1 mit Hilfe eines sogenannten Corrugators an den Verbundschlauch 1 angeformt werden. Der Verbundschlauch 1 weist an den Wellentälern 7 einen kleineren Außendurchmesser auf als an den Wellenbergen 8.

Wie die Fig. 2 zeigt, kann der Verbundschlauch 1 zumindest an den Wellenbergen 8 außenseitig mit einer Wellung 9 versehen sein. Die Wellung 9 läuft in der Umfangsrichtung U1 vollständig um den Verbundschlauch 1 um. Die Wellung 9 wird dadurch gebildet, dass erste Wandabschnitte 10 und zweite Wandabschnitte 11, von denen in der Fig. 2 nur jeweils zwei mit einem Bezugszeichen versehen sind, abwechseln in der Umfangsrichtung U1 nebeneinander angeordnet sind. Die ersten Wandabschnitte 10 erstrecken sich dabei in der Radialrichtung R1 über die zweiten Wandabschnitte 11 heraus. Das heißt, die zweiten Wandabschnitte 11 sind bezüglich der ersten Wandabschnitte 10 in der Radialrichtung R1 zurückgesetzt.

Vorzugsweise ist eine beliebige Anzahl an ersten Wandabschnitten 10 und an zweiten Wandabschnitten 11 vorgesehen, die in der Umfangsrichtung U1 abwechseln angeordnet und gleichmäßig verteilt sind. Die Anzahl der ersten Wandabschnitte 10 entspricht dabei bevorzugt der Anzahl der zweiten Wandabschnitte 11. Die Wellung 9 ist vorzugsweise nur im Bereich der Wellenberge 8 und nicht im Bereich der Wellentäler 7 vorgesehen.

Die ersten Wandabschnitte 10 sind aus einem ersten Kunststoffmaterial gefertigt, und die zweiten Wandabschnitte 11 sind aus einem sich von dem ersten Kunststoffmaterial unterscheidenden zweiten Kunststoffmaterial gefertigt. Insbesondere ist das zweite Kunststoffmaterial weicher als das erste Kunststoffmaterial. Das zweite Kunststoffmaterial kann beispielsweise eine Shore-A-Härte in einem Bereich von bevorzugt 10 bis 70 aufweisen und das erste Kunststoffmaterial kann beispielsweise eine Shore-D-Härte in einem Bereich von bevorzugt 40 bis 90 aufweisen.

In der Umfangsrichtung U1 sind jeweils abwechselnd ein erster Wandabschnitt 10 und ein zweiter Wandabschnitt 11 nebeneinander angeordnet. Die ersten Wandabschnitte 10 und die zweiten Wandabschnitte 11 erstrecken sich in der Längsrichtung L und sind parallel zueinander angeordnet. Insbesondere verlaufen die ersten Wandabschnitte 10 und die zweiten Wandabschnitte 11 parallel zu der Symmetrieachse M1. Die ersten Wandabschnitte 10 und die zweiten Wandabschnitte 11 erstrecken sich in der Radialrichtung R1 über eine gesamte Wandstärke W des Verbundschlauchs 1. Hierunter ist zu verstehen, dass in der Radialrichtung R1 betrachtet die ersten Wandabschnitte 10 nur mit dem ersten Kunststoffmaterial gebildet sind und die zweiten Wandabschnitte 11 nur mit dem zweiten Kunststoffmaterial gebildet sind. Insbesondere heißt dies auch, dass das erste Kunststoffmaterial und das zweite Kunststoffmaterial in der Radialrichtung R1 betrachtet nicht übereinander, sondern in der Umfangsrichtung U1 betrachtet bevorzugt ausschließlich nebeneinander angeordnet sind.

Der Verbundschlauch 1 ist aufgrund der in der Umfangsrichtung U1 gleichmäßig verteilten, flexibel verformbaren, zweiten Wandabschnitte 11 sehr flexibel, ohne dass diese Flexibilität von den aus dem härteren ersten Kunststoffmaterial gefertigten ersten Wandabschnitten 10 beeinflusst wird. Insbesondere können die zweiten Wandabschnitte 11, die aus dem weicheren zweiten Kunststoffmaterial gefertigt sind, ganz gezielt im Hinblick auf die gewünschte Flexibilität des Verbundschlauchs 1 gewählt und ausgelegt werden.

Demgegenüber sind die aus dem härteren ersten Kunststoffmaterial gefertigten ersten Wandabschnitte 10, welche in der Radialrichtung R1 über die zweiten Wandabschnitte 11 hervorspringen, für Prozesse zuständig, welche durch bewegte, an ihnen anliegende Flächen ausgelöst werden, wobei diese im Hinblick auf die gewünschten Reibeigenschaften sowie die Abriebfestigkeit ebenfalls gezielt durch eine geeignete Materialwahl ausgelegt werden können, ohne dass diese auf die Eigenschaften der zweiten Wandabschnitte 11, die eine geringere Härte aufweisen, Einfluss nehmen.

Der Verbundschlauch 1 kann abweichend von der in den Fig. 1 und 2 gezeigten Ausführungsform verschiedenste Geometrien aufweisen. Beispielsweise kann der Verbundschlauch 1 auch als Glattschlauch ausgebildet sein. Der Verbundschlauch 1 kann mehr als zwei unterschiedliche Kunststoffmaterialien aufweisen. Beispielsweise kann der Verbundschlauch 1 drei, vier, fünf oder mehr als fünf unterschiedliche Kunststoffmaterialien aufweisen. In diesem Fall weist der Verbundschlauch 1 auch mehr als zwei unterschiedliche Wandabschnitte 10, 11 auf. Beispielsweise kann der Verbundschlauch 1 drei, vier, fünf oder mehr als fünf unterschiedliche Wandabschnitte 10, 11 aufweisen.

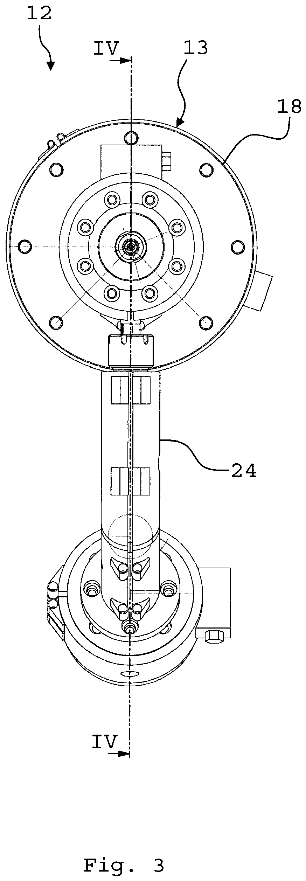

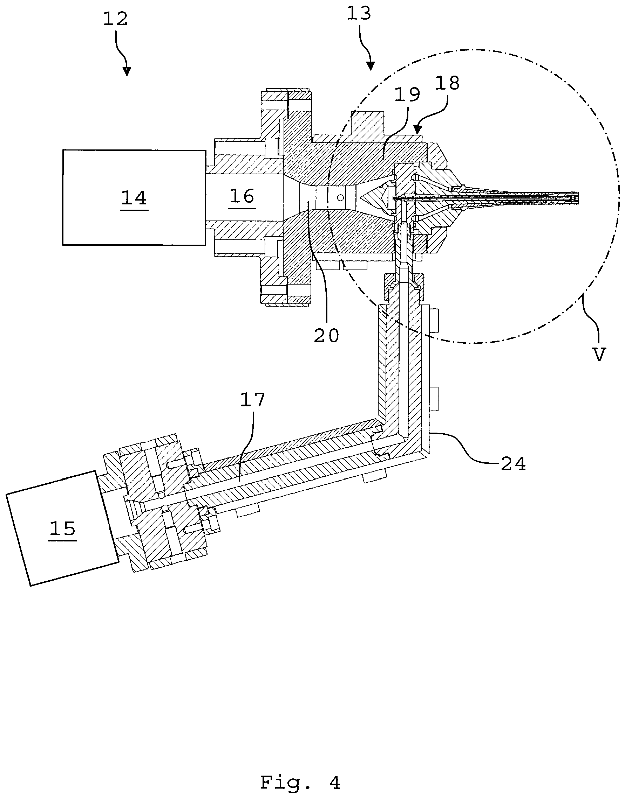

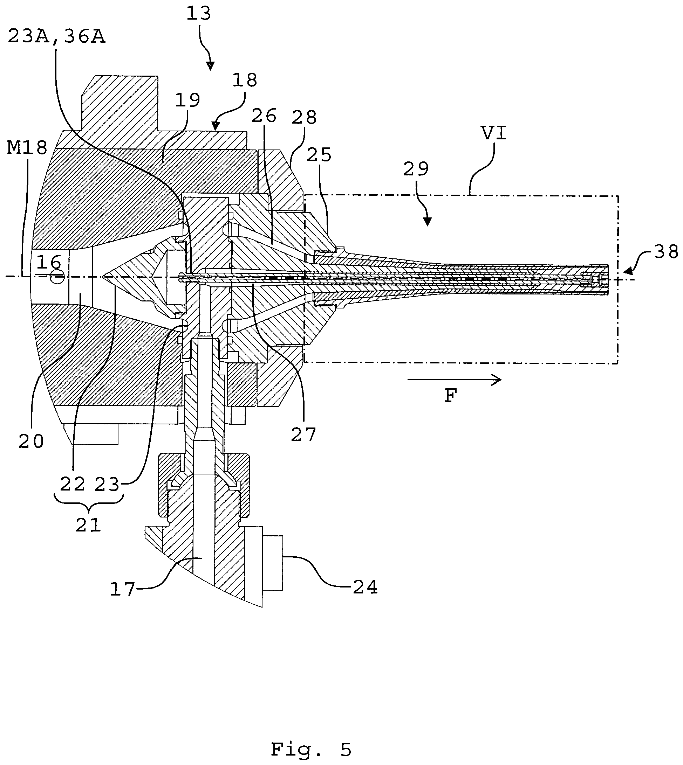

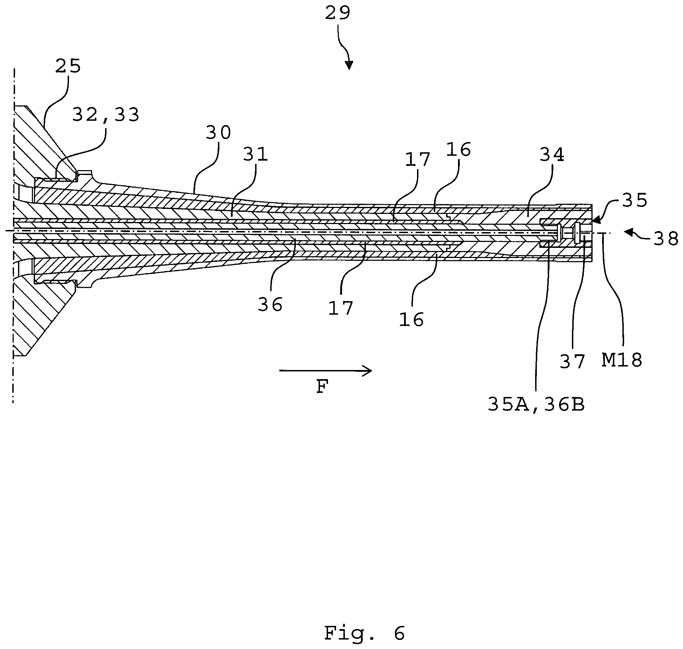

Die Fig. 3 zeigt eine schematische Vorderansicht einer Ausführungsform einer Mehrkomponenten-Extrusionsanlage 12 zum Herstellen eines derartigen Verbundschlauchs 1. Die Fig. 4 zeigt eine schematische Schnittansicht der Mehrkomponenten-Extrusionsanlage 12 gemäß der Schnittlinie IV-IV der Fig. 3. Die Fig. 5 zeigt die Detailansicht V gemäß der Fig. 4 und die Fig. 6 zeigt die Detailansicht VI gemäß der Fig. 5. Im Folgenden wird auf die Fig. 3 bis 6 gleichzeitig Bezug genommen.

Mehrkomponenten-Extrusionsanlage 12 umfasst einen Mehrkomponenten-Extrusionsspritzkopf 13. Der Mehrkomponenten-Extrusionsspritzkopf 13 ist dazu eingerichtet, zumindest zwei unterschiedliche Kunststoffmaterialien, beispielsweise das zuvor erwähnte erste Kunststoffmaterial und das zweite Kunststoffmaterial, zu verarbeiten. Der Mehrkomponenten-Extrusionsspritzkopf 13 kann aber auch dazu eingerichtet sein, mehr als zwei Kunststoffmaterialien, beispielsweise drei, vier, fünf oder mehr als fünf unterschiedliche Kunststoffmaterialien zu verarbeiten. Beispielsweise kann der Mehrkomponenten-Extrusionsspritzkopf 13 ein Zweikomponenten-Extrusionsspritzkopf sein. Die Mehrkomponenten-Extrusionsanlage 12 kann einen nicht gezeigten Corrugator zum Anformen der Wellentäler 7 und Wellenberge 8 an den Verbundschlauch 1 umfassen.

Der Mehrkomponenten-Extrusionsspritzkopf 13 ist Teil der Mehrkomponenten-Extrusionsanlage 12. Die Mehrkomponenten-Extrusionsanlage 12 umfasst einen Hauptextruder 14 zum Plastifizieren des ersten Kunststoffmaterials und einen Beispritzextruder 15 zum Plastifizieren des zweiten Kunststoffmaterials. Die Mehrkomponenten-Extrusionsanlage 12 kann allerdings eine beliebige Anzahl an Beispritzextrudern 15 aufweisen.

Der Hauptextruder 14 ist dazu eingerichtet, das erste Kunststoffmaterial zu plastifizieren und dem Mehrkomponenten-Extrusionsspritzkopf 13 einen ersten Schmelzestrom 16 zuzuführen. Der Beispritzextruder 15 ist dazu eingerichtet, das zweite Kunststoffmaterial zu plastifizieren und dem Mehrkomponenten-Extrusionsspritzkopf 13 einen zweiten Schmelzestrom 17 zuzuführen. Der Mehrkomponenten-Extrusionsspritzkopf 13 umfasst einen Grundspritzkopf 18, der einen Basiskörper 19 aufweist, der im Wesentlichen rotationssymmetrisch zu einer Mittel- oder Symmetrieachse M18 des Grundspritzkopfs 18 ausgebildet ist.

Mittig in dem Basiskörper 19 und rotationssymmetrisch zu der Symmetrieachse M18 ist eine Bohrung 20 vorgesehen, durch die hindurch der erste Schmelzestrom 16 einem Torpedo 21 des Grundspritzkopfs 18 zugeführt wird. Der Torpedo 21 umfasst einen Schmelzteiler 22 und eine Verteilerplatte 23, die mit dem Schmelzeteiler 22 verbunden ist. Die Verteilerplatte 23 umfasst eine zentrisch angebrachte Gewindebohrung 23A. Der Verteilerplatte 23 wird der zweite Schmelzestrom 17 mit Hilfe einer Schmelzezuleitung 24 zugeführt.

Der Mehrkomponenten-Extrusionsspritzkopf 13 umfasst weiterhin einen dem Torpedo 21 nachgeordneten Düsenhalter 25. Der Düsenhalter 25 umfasst einen ersten Kanal 26 für den ersten Schmelzestrom 16 und einen zweiten Kanal 27 für den zweiten Schmelzestrom 17. Die Kanäle 26, 27 können rotationssymmetrisch um die Symmetrieachse M18 umlaufen. Dabei kann der zweite Kanal 27 innerhalb des ersten Kanals 26 angeordnet sein. Die Verteilerplatte 23 führt den ersten Schmelzestrom 16 dem ersten Kanal 26 und den zweiten Schmelzestrom 17 dem zweiten Kanal 27 zu. Weiterhin umfasst der Mehrkomponenten-Extrusionsspritzkopf 13 eine Befestigungsplatte 28 zum Befestigen des Düsenhalters 25 an dem Basiskörper 19. Die Befestigungsplatte 28 kann beispielsweise mit dem Basiskörper 19 verschraubt sein.

Der Mehrkomponenten-Extrusionsspritzkopf 13 weist weiterhin eine Extrusionsdüse 29 auf, die eine Außendüse 30 sowie eine innerhalb der Außendüse 30 angeordnete Innendüse 31 umfasst. Die Außendüse 30 und die Innendüse 31 sind rotationssymmetrisch zu der Symmetrieachse M18 ausgebildet. Die Außendüse 30 ist mit dem Düsenhalter 25 verschraubt. Hierzu kann an dem Düsenhalter 25 ein Innengewinde 32 und an der Außendüse 30 ein korrespondierendes Außengewinde 33 vorgesehen sein.

Die Innendüse 31 ist mit Hilfe einer Schmelzestromverteileinrichtung 34, einem Befestigungselement 35, das eine Gewindebohrung 35A umfasst, und einen Befestigungsstab 36, der durch die Innendüse 31 hindurchgeführt ist, mit der Verteilerplatte 23 des Torpedos 21 verspannt. Hierzu umfasst der Befestigungsstab 36 an seinen Endabschnitten jeweils ein Außengewinde 36A, 36B. Das Außengewinde 36A ist in die Gewindebohrung 23A der Verteilerplatte 23 eingeschraubt und das Außengewinde 36B ist in die Gewindebohrung 35A des Befestigungselements 35 eingeschraubt. Der Befestigungsstab 36 ist mittig durch die Innendüse 31 hindurchgeführt, wobei vorderseitig auf den Befestigungsstab 36 die Schmelzestromverteileinrichtung 34 aufgesteckt ist. In der Schmelzestromverteileinrichtung 34 ist wiederum das Befestigungselement 35 aufgenommen. Das Befestigungselement 35 umfasst einen Montageabschnitt 37, beispielsweise einen Innensechskant.

Der Grundspritzkopf 18 ist nun mit Hilfe des Torpedos 21 und des Düsenhalters 25 dazu eingerichtet, der Extrusionsdüse 29 den ersten Schmelzestrom 16 und den zweiten Schmelzestrom 17 zuzuführen. Dabei werden der erste Schmelzestrom 16 und der zweite Schmelzestrom 17 in einer Förderrichtung F, die von dem Grundspritzkopf 18 weg in Richtung eines Düsenaustritts 38 der Extrusionsdüse 29 orientiert ist, getrennt voneinander in der Extrusionsdüse 29 geführt. Das heißt, der erste Schmelzestrom 16 vermischt sich nicht mit dem zweiten Schmelzestrom 17 bei dem Fördern derselben in der Förderrichtung F. Die Förderrichtung F ist parallel zu der Symmetrieachse M18 ausgebildet. Der erste Schmelzestrom 16 ist dabei zwischen der Außendüse 30 und der Innendüse 31 und der zweite Schmelzestrom 17 ist zwischen der Innendüse 31 und dem Befestigungsstab 36 geführt.

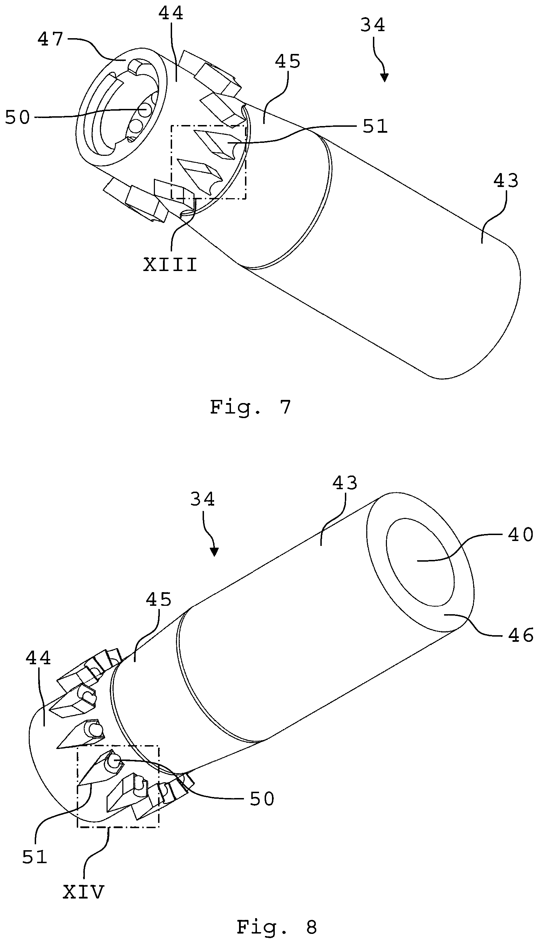

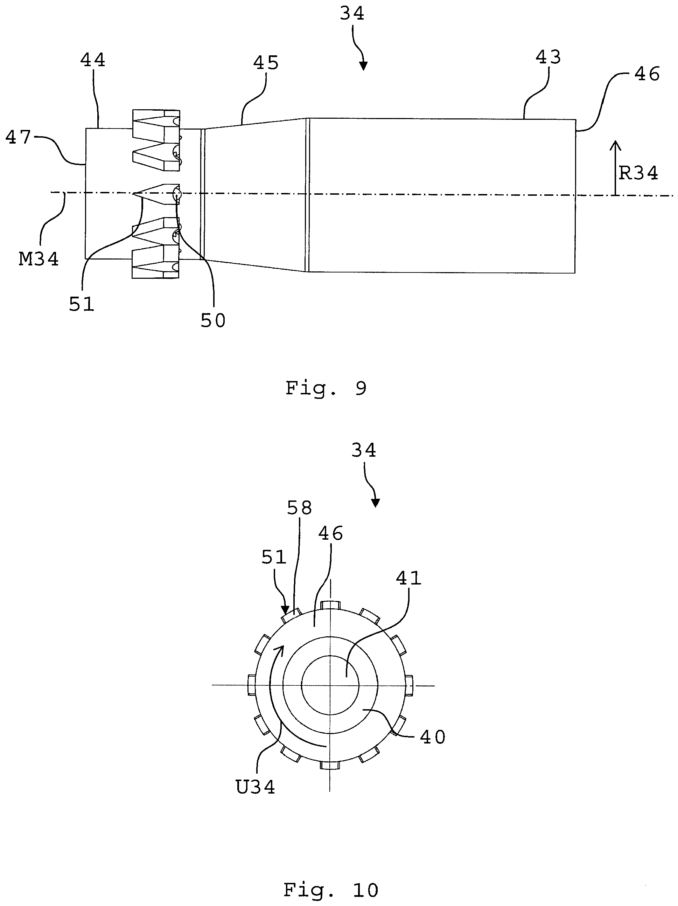

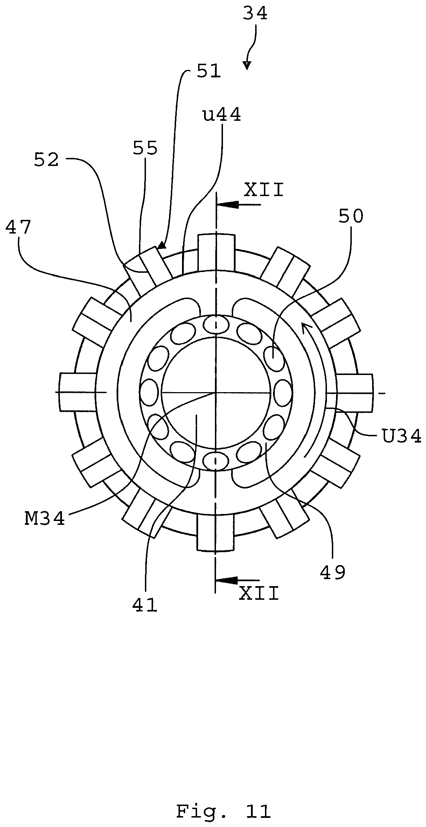

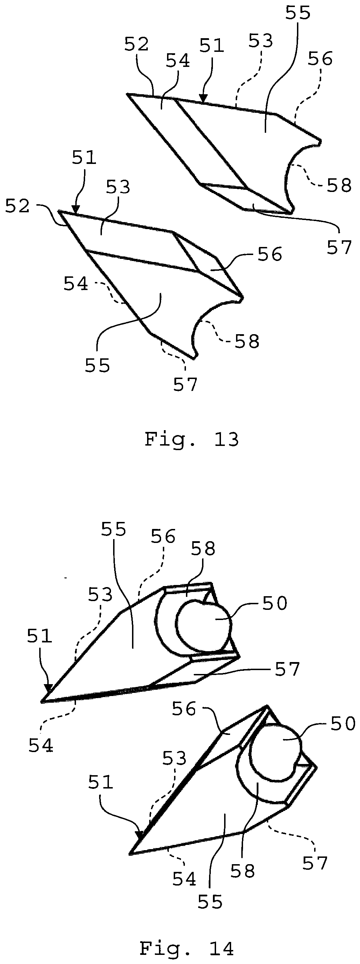

Die in den Fig. 7 bis 14 gezeigte Schmelzestromverteileinrichtung 34 ist außerhalb des Grundspritzkopfs 18 und innerhalb der Extrusionsdüse 29 angeordnet. Das heißt, die Schmelzestromverteileinrichtung 34 ist beabstandet von dem Grundspritzkopf 18 positioniert. Die Schmelzestromverteileinrichtung 34 ist rotationssymmetrisch zu einer Mittel- oder Symmetrieachse M34 ausgebildet. Die Symmetrieachse M34 kann mit der Symmetrieachse M18 übereinstimmen. Die Schmelzestromverteileinrichtung 34 umfasst einen Basiskörper 39 mit einem mittigen Aufnahmebereich 40, in dem das Befestigungselement 35 aufnehmbar ist.

Weiterhin umfasst der Basiskörper 39 eine mittige Bohrung 41, durch die der Befestigungsstab 36 hindurchgeführt ist. Ein Durchmesser d40 des Aufnahmebereichs 40 ist dabei größer als ein Innendurchmesser d41 der Bohrung 41. Eine Stirnseite 42 des Aufnahmebereichs 40 dient als Gegenlager für das Befestigungselement 35. Der Basiskörper 39 umfasst eine erste zylindrische Außenfläche 43 sowie eine zweite zylindrische Außenfläche 44. Die Außenflächen 43, 44 sind rotationssymmetrisch zu der Symmetrieachse M34 ausgebildet und weisen eine kreiszylindrische Geometrie auf. Zwischen der ersten Außenfläche 43 und der zweiten Außenfläche 44 ist eine kegelstumpfförmige dritte Außenfläche 45 vorgesehen. Ein Außendurchmesser d43 der ersten Außenfläche 43 ist größer als ein Außendurchmesser d44 der zweiten Außenfläche 44. Die zweite Außenfläche 44 geht über die dritte Außenfläche 45 in die erste Außenfläche 43 über.

Der Basiskörper 39 umfasst weiterhin eine erste Seite oder Vorderseite 46, die dem Grundspritzkopf 18 abgewandt ist, und eine zweite Seite oder Rückseite 47, die dem Grundspritzkopf 18 zugewandt ist. An der Rückseite 47 liegt auch die Innendüse 31 stirnseitig an. Insbesondere bildet die Vorderseite 46 einen Teil des Düsenaustritts 38 und ist bündig mit diesem angeordnet.

In dem Basiskörper 39 ist ferner ein Schmelzeaufnahmeabschnitt 48 für den zweiten Schmelzestrom 17 vorgesehen, durch den der Befestigungsstab 36 hindurchgeführt ist. Ein Innendurchmesser d48 des Schmelzeaufnahmeabschnitts 48 ist größer als der Innendurchmesser d41 der Bohrung 41. Der Innendurchmesser d41 kann dabei im Wesentlichen einem Außendurchmesser d36 des Befestigungsstabs 36 entsprechen. Der Außendurchmesser d36 ist vorzugsweise geringfügig kleiner als der Innendurchmesser d41. Das heißt, wenn der Befestigungsstab 36 durch den Schmelzeaufnahmeabschnitt 48 hindurchgeführt ist, ist umfänglich um den Befestigungsstab 36 ein im Querschnitt ringförmiger Hohlraum vorgesehen, der den zweiten Schmelzestrom 17 aufnimmt.

Zwischen dem Schmelzeaufnahmeabschnitt 48 und der Bohrung 41 ist ein kegelstumpfförmiger Schmelzewegführabschnitt 49 vorgesehen. Der Schmelzewegführabschnitt 49 umfasst zumindest eine, vorzugsweise jedoch eine Vielzahl an Bohrungen 50, die von dem Schmelzeaufnahmeabschnitt 48 hin zu der zweiten Außenfläche 44 des Basiskörpers 39 führen. Die Anzahl der Bohrungen 50 ist beliebig. Beispielsweise können zwölf derartige Bohrungen 50 vorgesehen sein. Es können allerdings auch weniger oder mehr als zwölf derartige Bohrungen 50 vorgesehen sein. Die Bohrungen 50 sind jeweils in einem Neigungswinkel α relativ zu der Symmetrieachse M34 geneigt. Der Neigungswinkel α kann beispielsweise 30° bis 50°, bevorzugt 35° bis 45°, weiter bevorzugt 40° betragen. Die Größe des Neigungswinkels α ist jedoch beliebig. Die Bohrungen 50 können auch als Kanäle bezeichnet werden.

Jeder Bohrung 50 ist ein Schmelzeteiler 51 zugeordnet, der außenseitig auf der zweiten Außenfläche 44 auf den Basiskörper 39 aufgesetzt ist. Vorzugsweise ist eine Vielzahl an Schmelzeteilern 51 vorgesehen. Insbesondere sind die Schmelzeteiler 51 materialeinstückig mit dem Basiskörper 39 ausgebildet. Die Schmelzeteiler 51 können auch als Inseln bezeichnet werden. Die Anzahl der Schmelzeteiler 51 entspricht bevorzugt der Anzahl der Bohrungen 50. Beispielsweise sind zwölf derartige Schmelzeteiler vorgesehen. Die Bohrungen 50 sind so angeordnet, dass diese jeweils zumindest abschnittsweise durch einen der Schmelzeteiler 51 hindurchgeführt sind.

Jeder Schmelzeteiler 51 umfasst eine Vorderkante 52 und zwei V-förmig von der Vorderkante 52 weg verlaufende Seitenwände 53, 54. Die Vorderkante 52 ist senkrecht zu der Symmetrieachse M34 angeordnet, kann jedoch auch zu dieser geneigt sein. Jeder Schmelzeteiler 51 umfasst weiterhin eine Außenfläche 55. Die Außenflächen 55 aller Schmelzeteiler 51 sind auf einer Kreisbahn angeordnet. Ein Außendurchmesser d51 der Schmelzeteiler 51 entspricht im Wesentlichen einem Innendurchmesser d30 der Außendüse 30. Vorzugsweise ist der Außendurchmesser d51 geringfügig kleiner als der Innendurchmesser d30. An die Seitenwände 53, 54 schließen sich zwei parallel und beabstandet voneinander verlaufende weitere Seitenwände 56, 57 an.

Die Bohrungen 50 und die Schmelzeteiler 51 sind gleichmäßig über einen Umfang u44 der zweiten Außenfläche 44 verteilt angeordnet. Insbesondere sind die Bohrungen 50 und die Schmelzeteiler 51 in einer Umfangsrichtung U34 der Schmelzestromverteileinrichtung 34 betrachtet nebeneinander positioniert. Die Umfangsrichtung U34 kann dabei im oder entgegen dem Uhrzeigersinn orientiert sein. Insbesondere ist die Umfangsrichtung U34 parallel zu der ersten Außenfläche 43 und der zweiten Außenfläche 44 positioniert. Die Schmelzestromverteileinrichtung 34 umfasst auch eine Radialrichtung R34, die von der Symmetrieachse M34 weg in Richtung der Außenflächen 43, 44 orientiert ist. Die Radialrichtung R34 ist senkrecht zu der Symmetrieachse M34 positioniert.

Jeder Schmelzeteiler 51 umfasst eine Rückwand 58, die bogenförmig, insbesondere kreisbogenförmig, gebogen sein kann. Jede Bohrung 50 durchbricht die Rückwand 58 des ihr zugeordneten Schmelzeteilers 51 zumindest teilweise. Das heißt, die Bohrungen 50 sind zumindest teilweise seitlich durch die Seitenwände 56, 57 abgeschirmt. Die Rückwand 58 kann auch eben oder V-förmig ausgestaltet sein.

Die Funktionalität der Schmelzestromverteileinrichtung 34 wird nachfolgend erläutert. Die Schmelzestromverteileinrichtung 34 ist dazu eingerichtet, mit Hilfe der Schmelzeteiler 51 den ersten Schmelzestrom 16 in der Umfangsrichtung U34 in beliebig viele Abschnitte aufzuteilen. Die Anzahl der Abschnitte entspricht dabei der Anzahl der Schmelzeteiler 51. Ferner kann mit Hilfe der Bohrungen 50 der zweite Schmelzestrom 17 dem aufgeteilten ersten Schmelzestrom 16 derart zugeführt werden, dass zumindest ein Abschnitt des zweiten Schmelzestroms 17 in der Umfangsrichtung U34 betrachtet innerhalb des ersten Schmelzestroms 16 angeordnet ist.

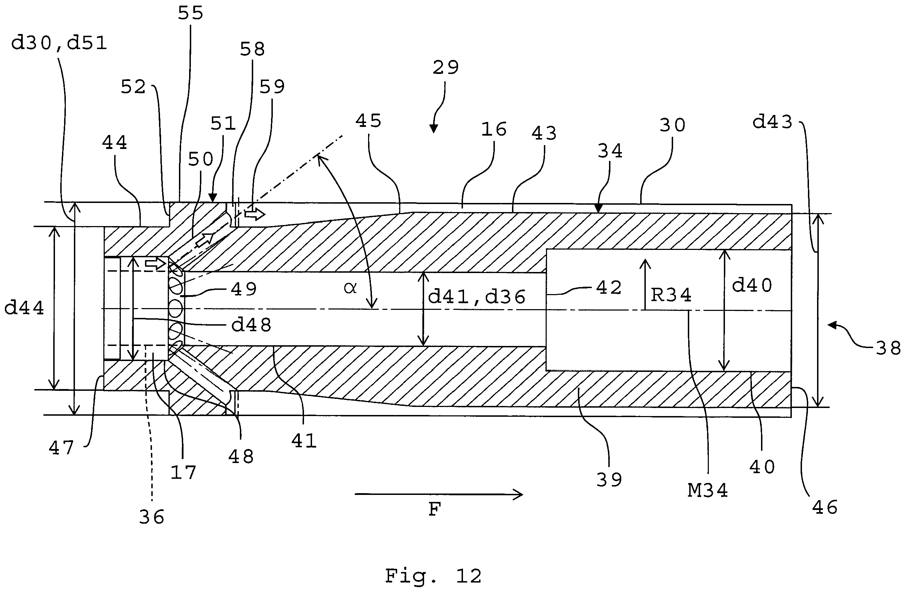

Hierbei teilt sich der erste Schmelzestrom 16 an den jeweiligen Vorderkanten 52 der Schmelzeteiler 51 und wird mit Hilfe der Seitenwände 53, 54 in der Umfangsrichtung U34 seitlich weggedrückt. Dadurch, dass rückseitig an den Schmelzeteilern 51 die Bohrungen 50 vorgesehen sind, wird der zweite Schmelzestrom 17 umfänglich aufgeteilt zwischen den aufgeteilten ersten Schmelzestrom 16 eingeleitet. Die Führung des zweiten Schmelzestroms 17 ist in der Fig. 12 mit Hilfe von Pfeilen 59 angedeutet.

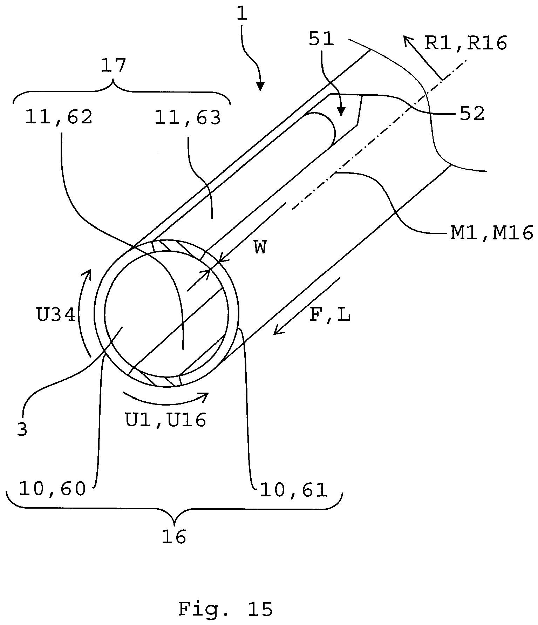

Die Fig. 15 zeigt hierzu beispielsweise einen Verbundschlauch 1, der mit dem Mehrkomponenten-Spritzkopf 13 hergestellt ist. Der Verbundschlauch 1 ist als Glattschlauch dargestellt. Der Verbundschlauch 1 kann jedoch die in der Fig. 1 gezeigten abwechselnd angeordneten Wellentäler 7 und Wellenberge 8 aufweisen. Bei dieser beispielhaften Ausführungsform umfasst die Schmelzestromverteileinrichtung 34 nur zwei um 180° versetzt angeordnete Schmelzeteiler 51. Wie die Fig. 15 zeigt, teilt die Vorderkante 52 des jeweiligen Schmelzeteilers 51 den ersten Schmelzestrom 16 in einen ersten Abschnitt 60 und in einen zweiten Abschnitt 61. Der erste Abschnitt 60 und der zweite Abschnitt 61 bilden zwei erste Wandabschnitte 10 des Verbundschlauchs 1. Die Förderrichtung F kann der Längsrichtung L entsprechen.

Der erste Schmelzestrom 16 kann rotationssymmetrisch zu einer Mittel- oder Symmetrieachse M16 ausgebildet sein, die der Symmetrieachse M1 entsprechen kann. Der erste Schmelzestrom 16 umfasst eine Umfangsrichtung U16, die im oder entgegen dem Uhrzeigersinn orientiert sein kann. Beispielsweise ist die Umfangsrichtung U16 entgegen dem Uhrzeigersinn orientiert. Die Umfangsrichtung U16 kann der Umfangsrichtung U1 entsprechen. Bevorzugt ist die Umfangsrichtung U16 parallel zu der Innenwandung 3 des Verbundschlauchs 1 positioniert. Die Umfangsrichtung U16 kann gegensinnig zu oder gleichsinnig mit der Umfangsrichtung U34 orientiert sein. Eine Radialrichtung R16 des ersten Schmelzestroms 16 ist senkrecht zu der Symmetrieachse M16 orientiert. Die Radialrichtung R16 kann mit der Radialrichtung R1 übereinstimmen.

Durch die Bohrungen 50 der Schmelzeteiler 51 wird der zweite Schmelzestrom 17 dem ersten Schmelzestrom 16 so zugeführt, dass zwei Abschnitte 62, 63, insbesondere ein erster Abschnitt 62 und ein zweiter Abschnitt 63, des zweiten Schmelzestroms 17 in der Umfangsrichtung U16 betrachtet zwischen den Abschnitten 60, 61 des ersten Schmelzestroms 16 angeordnet werden. Der erste Abschnitt 62 und der zweite Abschnitt 63 bilden zwei zweite Wandabschnitte 11 des Verbundschlauchs 1. In der Radialrichtung R16 betrachtet sind die Abschnitte 62, 63 des zweiten Schmelzestroms 17 außerhalb der Abschnitte 60, 61 des ersten Schmelzestroms 16 und insbesondere nicht übereinander angeordnet.

Mit Hilfe des Mehrkomponenten-Extrusionsspritzkopfs 13 ist eine optimale Materialführung der beiden Schmelzeströme 16, 17 gewährleistet. Ferner ist eine optimale Materialverteilung gewährleistet, wobei die Abschnitte 60 bis 63 der Schmelzeströme 16, 17 in der Förderrichtung F betrachtet parallel zueinander verlaufen und in der Umfangsrichtung U1 des Verbundschlauchs 1, der Umfangsrichtung U16 des ersten Schmelzestroms 16 beziehungsweise der Umfangsrichtung U34 der Schmelzestromverteileinrichtung 34 nebeneinander positioniert sind. Es ergibt sich eine kurze Verweilzeit der verschiedenen Kunststoffmaterialien in dem Mehrkomponenten-Extrusionsspritzkopfs 13, wodurch eine Materialschädigung vermieden wird. Mit Hilfe des Mehrkomponenten-Extrusionsspritzkopfs 13 ergeben sich vielfältige Möglichkeiten, mehrere Komponenten, insbesondere unterschiedliche Kunststoffmaterialien, axial zu extrudieren. Dadurch, dass die Schmelzestromverteileinrichtung 34 unmittelbar an dem Düsenaustritt 38 angeordnet ist, kann diese sehr schnell ausgetauscht werden.

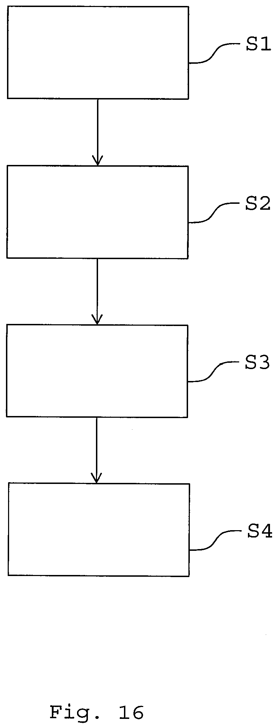

Die Fig. 16 zeigt ein schematisches Blockdiagramm einer Ausführungsform eines Verfahrens zum Herstellen des Verbundschlauchs 1 mit Hilfe des Mehrkomponenten-Extrusionsspritzkopfs 13. In einem Schritt S1 werden der erste Schmelzestrom 16 und der zweite Schmelzestrom 17 mit Hilfe des Grundspritzkopfs 18 der Extrusionsdüse 29 zugeführt. In einem Schritt S2 werden der erste Schmelzestrom 16 und der zweite Schmelzestrom 17 voneinander getrennt in der Förderrichtung F, die von dem Grundspritzkopf 18 weg in Richtung des Düsenaustritts 38 orientiert ist, in der Extrusionsdüse 29 geführt. Vorzugsweise wird der Schritt S2 nach dem Schritt S1 durchgeführt.

In einem Schritt S3 wird der erste Schmelzestrom 16 in der Umfangsrichtung U16 mit Hilfe der in der Extrusionsdüse 29 und außerhalb des Grundspritzkopfs 18 angeordneten Schmelzestromverteileinrichtung 34 aufgeteilt. Der erste Schmelzestrom 16 wird dabei mit Hilfe der Schmelzeteiler 51 aufgeteilt. Die Anzahl der Schmelzeteiler 51 bestimmt, in wie viele Abschnitte 60, 61 der erste Schmelzestrom 16 aufgeteilt wird. Beispielsweise wird der erste Schmelzestrom 16 in zwölf Abschnitte 60, 61 aufgeteilt.

In einem Schritt S4 wird der zweite Schmelzestrom 17 dem aufgeteilten ersten Schmelzestrom 16 mit Hilfe der Schmelzestromverteileinrichtung 34 zugeführt. Hierbei wird zumindest ein Abschnitt 62, 63 des zweiten Schmelzestroms 17 in der Umfangsrichtung U16 innerhalb des ersten Schmelzestroms 16 angeordnet. Unter "innerhalb" ist vorliegend zu verstehen, dass in der Umfangsrichtung U16 betrachtet zumindest ein Abschnitt 62, 63 des zweiten Schmelzestroms 17 zwischen zwei Abschnitten 60, 61 des ersten Schmelzstroms 16 angeordnet ist. Für den Fall, dass die Schmelzestromverteileinrichtung 34 nur einen Schmelzeteiler 51 aufweist, kann der erste Schmelzestrom 16 auch in nur einen Abschnitt 60, 61 aufgeteilt werden, der umfänglich nicht geschlossen ist, sondern einen entlang der Förderrichtung F verlaufenden Schlitz aufweist, in dem der zumindest eine Abschnitt 62, 63 des zweiten Schmelzestroms 17 angeordnet wird.

Insbesondere wird der zumindest eine Abschnitt 62, 63 des zweiten Schmelzestroms 17 in der Umfangsrichtung U16 zwischen zwei Abschnitten 60, 61 des ersten Schmelzestroms 16 angeordnet. Bevorzugt weist der erste Schmelzestrom 16 eine Vielzahl an Abschnitten 60, 61, beispielsweise zwölf Abschnitte 60, 61, und der zweite Schmelzestrom 17 weist ebenfalls eine Vielzahl an Abschnitten 62, 63, beispielsweise ebenfalls zwölf Abschnitte 62, 63, auf. Die Abschnitte 60, 61 des ersten Schmelzestroms 16 und die Abschnitte 62, 63 des zweiten Schmelzestroms 17 sind in der Umfangsrichtung U16 so abwechselnd angeordnet, dass immer ein Abschnitt 60, 61 des ersten Schmelzestroms 16 zwischen zwei Abschnitten 62, 63 des zweiten Schmelzestroms 17 und umgekehrt angeordnet wird.

Mit Hilfe der Schmelzeteiler 51 kann der erste Schmelzestrom 16 so geteilt und der zweite Schmelzestrom 17 dem geteilten ersten Schmelzestrom 16 derart zugeführt werden, dass sich die Abschnitte 60, 61, 62, 63 des ersten Schmelzestroms 16 und des zweiten Schmelzestroms 17 in der Radialrichtung R1 des Verbundschlauchs 1 jeweils über die gesamte Wandstärke W desselben erstrecken. Das heißt, die Abschnitte 60, 61, 62, 63 sind in der Radialrichtung R1 beziehungsweise in der Radialrichtung R16 betrachtet nicht übereinander positioniert, sondern in der Umfangsrichtung U16 des ersten Schmelzestroms 16 beziehungsweise der Umfangsrichtung U1 des Verbundschlauchs 1 jeweils nebeneinander positioniert.

Obwohl die vorliegende Erfindung anhand von Ausführungsbeispielen beschrieben wurde, ist sie vielfältig modifizierbar.

### BEZUGSZEICHENLISTE

- 1: Verbundschlauch
- 2: Kabelbaum
- 3: Innenwandung
- 4: Kabel
- 5: Kabel
- 6: Kabel
- 7: Wellental
- 8: Wellenberg
- 9: Wellung
- 10: Wandabschnitt
- 11: Wandabschnitt
- 12: Mehrkomponenten-Extrusionsanlage
- 13: Mehrkomponenten-Extrusionsspritzkopf
- 14: Hauptextruder
- 15: Beispritzextruder
- 16: Schmelzestrom
- 17: Schmelzestrom
- 18: Grundspritzkopf
- 19: Basiskörper
- 20: Bohrung
- 21: Torpedo
- 22: Schmelzeteiler
- 23: Verteilerplatte
- 23A: Gewindebohrung
- 24: Schmelzezuleitung
- 25: Düsenhalter
- 26: Kanal
- 27: Kanal
- 28: Befestigungsplatte
- 29: Extrusionsdüse
- 30: Außendüse
- 31: Innendüse
- 32: Innengewinde
- 33: Außengewinde
- 34: Schmelzestromverteileinrichtung
- 35: Befestigungselement
- 35A: Gewindebohrung
- 36: Befestigungsstab
- 36A: Außengewinde
- 36B: Außengewinde
- 37: Montageabschnitt
- 38: Düsenaustritt
- 39: Basiskörper
- 40: Aufnahmebereich
- 41: Bohrung
- 42: Stirnseite
- 43: Außenfläche
- 44: Außenfläche
- 45: Außenfläche
- 46: Vorderseite
- 47: Rückseite
- 48: Schmelzeaufnahmeabschnitt
- 49: Schmelzewegführabschnitt
- 50: Bohrung
- 51: Schmelzeteiler
- 52: Vorderkante
- 53: Seitenwand
- 54: Seitenwand
- 55: Außenfläche
- 56: Seitenwand
- 57: Seitenwand
- 58: Rückwand
- 59: Pfeil
- 60: Abschnitt
- 61: Abschnitt
- 62: Abschnitt
- 63: Abschnitt

- d30: Innendurchmesser
- d36: Außendurchmesser
- d41: Innendurchmesser
- d43: Außendurchmesser
- d44: Außendurchmesser
- d48: Innendurchmesser
- d51: Außendurchmesser
- F: Förderrichtung
- I: Innenraum
- L: Längsrichtung
- M1: Symmetrieachse
- M16: Symmetrieachse
- M18: Symmetrieachse
- M34: Symmetrieachse
- R1: Radialrichtung
- R16: Radialrichtung
- R34: Radialrichtung
- U1: Umfangsrichtung
- U16: Umfangsrichtung
- U34: Umfangsrichtung
- u44: Umfang
- W: Wandstärke
- α: Neigungswinkel

## Patentansprüche

1. Mehrkomponenten-Extrusionsspritzkopf (13) zum Herstellen eines Verbundschlauchs (1), mit einer Extrusionsdüse (29), einem Grundspritzkopf (18), der dazu eingerichtet ist, der Extrusionsdüse (29) einen ersten Schmelzestrom (16) und einen zweiten Schmelzestrom (17) zuzuführen, wobei der erste Schmelzestrom (16) und der zweite Schmelzestrom (17) in einer Förderrichtung (F), die von dem Grundspritzkopf (18) weg in Richtung eines Düsenaustritts (38) der Extrusionsdüse (29) orientiert ist, getrennt voneinander in der Extrusionsdüse (29) geführt sind, und einer in der Extrusionsdüse (29) und außerhalb des Grundspritzkopfs (18) angeordneten Schmelzestromverteileinrichtung (34), die dazu eingerichtet ist, den ersten Schmelzestrom (16) in einer Umfangsrichtung (U16) desselben aufzuteilen und die dazu eingerichtet ist, den zweiten Schmelzestrom (17) dem aufgeteilten ersten Schmelzestrom (16) derart zuzuführen, dass zumindest ein Abschnitt (62, 63) des zweiten Schmelzestroms (17) in der Umfangsrichtung (U16) innerhalb des ersten Schmelzestroms (16) angeordnet ist,
**dadurch gekennzeichnet, dass**
die Schmelzestromverteileinrichtung (34) in oder an dem Düsenaustritt (38) angeordnet ist.

2. Mehrkomponenten-Extrusionsspritzkopf nach Anspruch 1, wobei eine Vorderseite (46) der Schmelzestromverteileinrichtung (34) bündig mit dem Düsenaustritt (38) abschließt.

3. Mehrkomponenten-Extrusionsspritzkopf nach Anspruch 1 oder 2, wobei in der Schmelzestromverteileinrichtung (34) ein von dem Düsenaustritt (38) erreichbares Befestigungselement (35) vorgesehen ist, und wobei die Schmelzestromverteileinrichtung (34) nach einem Lösen des Befestigungselements (35) aus der Extrusionsdüse (29) entnehmbar ist.

4. Mehrkomponenten-Extrusionsspritzkopf nach Anspruch 3, wobei die Schmelzestromverteileinrichtung (34) mit Hilfe des Befestigungselements (35) und eines durch die Extrusionsdüse (29) hindurchgeführten Befestigungsstabs (36) mit dem Grundspritzkopf (18) verspannt ist.

5. Mehrkomponenten-Extrusionsspritzkopf nach einem der Ansprüche 1 - 4, wobei die Schmelzestromverteileinrichtung (34) zumindest einen Schmelzeteiler (51) aufweist, der dazu eingerichtet ist, den ersten Schmelzestrom (16) in der Umfangsrichtung (U16) desselben aufzuteilen.

6. Mehrkomponenten-Extrusionsspritzkopf nach Anspruch 5, wobei der zumindest eine Schmelzeteiler (51) eine Vorderkante (52) sowie zwei ausgehend von der Vorderkante (52) sich in der Förderrichtung (F) voneinander weg erstreckende Seitenwände (53, 54) aufweist.

7. Mehrkomponenten-Extrusionsspritzkopf nach Anspruch 5 oder 6, wobei der zumindest eine Schmelzeteiler (51) eine bogenförmig, insbesondere kreisbogenförmig, ausgebildete Rückwand (58) aufweist.

8. Mehrkomponenten-Extrusionsspritzkopf nach einem der Ansprüche 5 - 7, wobei die Schmelzestromverteileinrichtung (34) zumindest eine Bohrung (50) aufweist, die dazu eingerichtet ist, den zweiten Schmelzestrom (17) dem aufgeteilten ersten Schmelzestrom (16) zuzuführen.

9. Mehrkomponenten-Extrusionsspritzkopf nach Anspruch 8, wobei die zumindest eine Bohrung (50) zumindest abschnittsweise durch den zumindest einen Schmelzeteiler (51) hindurchgeführt ist.

10. Mehrkomponenten-Extrusionsanlage (12) mit einem Mehrkomponenten-Extrusionsspritzkopf (13) nach einem der Ansprüche 1 - 9, einem Hauptextruder (14) zum Zuführen des ersten Schmelzestroms (16) zu dem Grundspritzkopf (18) und einem Beispritzextruder (15) zum Zuführen des zweiten Schmelzestroms (17) zu dem Grundspritzkopf (18).

11. Verfahren zum Herstellen eines Verbundschlauchs (1) mit Hilfe eines Mehrkomponenten-Extrusionsspritzkopfs (13), mit folgenden Schritten:
Zuführen (S1) eines ersten Schmelzestroms (16) und eines zweiten Schmelzestroms (17) zu einer Extrusionsdüse (29) mit Hilfe eines Grundspritzkopfs (18),
voneinander getrenntes Führen (S2) des ersten Schmelzestroms (16) und des zweiten Schmelzestroms (17) in einer Förderrichtung (F), die von dem Grundspritzkopf (18) weg in Richtung eines Düsenaustritts (38) der Extrusionsdüse (29) orientiert ist, in der Extrusionsdüse (29),
Aufteilen (S3) des ersten Schmelzestroms (16) in einer Umfangsrichtung (U16) desselben mit Hilfe einer in der Extrusionsdüse (29) und außerhalb des Grundspritzkopfs (18) angeordneten Schmelzestromverteileinrichtung (34), und
Zuführen (S4) des zweiten Schmelzestroms (17) zu dem aufgeteilten ersten Schmelzestrom (16) mit Hilfe der Schmelzestromverteileinrichtung (34) derart, dass zumindest ein Abschnitt (62, 63) des zweiten Schmelzestroms (17) in der Umfangsrichtung (U16) innerhalb des ersten Schmelzestroms (16) angeordnet wird,
**dadurch gekennzeichnet dass** die Schmelzestromverteileinrichtung (34) in oder an dem Düsenaustritt (38) angeordnet ist.

12. Verfahren nach Anspruch 11, wobei der zumindest eine Abschnitt (62, 63) des zweiten Schmelzestroms (17) in der Umfangsrichtung (U16) zwischen zwei Abschnitten (60, 61) des ersten Schmelzestroms (16) angeordnet wird.

13. Verfahren nach Anspruch 12, wobei der erste Schmelzestrom (16) eine Vielzahl an Abschnitten (60, 61) und der zweite Schmelzestrom (17) eine Vielzahl an Abschnitten (62, 63) aufweist, und wobei die Abschnitte (60, 61) des ersten Schmelzestroms (16) und die Abschnitte (62, 63) des zweiten Schmelzestroms (17) in der Umfangsrichtung (U16) so abwechselnd angeordnet werden, dass immer ein Abschnitt (60, 61) des ersten Schmelzestroms (16) zwischen zwei Abschnitten (62, 63) des zweiten Schmelzestroms (17) und umgekehrt angeordnet wird.

14. Verfahren nach Anspruch 12 oder 13, wobei der erste Schmelzestrom (16) so geteilt und der zweite Schmelzestrom (17) dem geteilten ersten Schmelzestrom (16) derart zugeführt wird, dass sich die Abschnitte (60, 61, 62, 63) des ersten Schmelzestroms (16) und des zweiten Schmelzestroms (17) in einer Radialrichtung (R1) des Verbundschlauchs (1) jeweils über eine gesamte Wandstärke (W) desselben erstrecken.

## Claims

1. Multi-component extrusion die head (13) for producing a composite tube (1), comprising an extrusion nozzle (29), a main die head (18), which is configured for supplying the extrusion nozzle (29) with a first melt flow (16) and a second melt flow (17), wherein the first melt flow (16) and the second melt flow (17) are guided separately from one another in the extrusion nozzle (29) in a conveying direction (F) oriented away from the main die head (18) in the direction of a nozzle outlet (38) of the extrusion nozzle (29), as well as comprising a melt flow distributor device (34) which is arranged in the extrusion nozzle (29) and outside the main die head (18) and which is configured for splitting the first melt flow (16) in a peripheral direction (U16) thereof and which is configured for supplying the second melt flow (17) to the split first melt flow (16) in such a way that at least one section (62, 63) of the second melt flow (17) is arranged within the first melt flow (16) in the peripheral direction (U16), **characterized in that** the melt flow distributor device (34) is arranged in or on the nozzle outlet (38).

2. Multi-component extrusion die head according to claim 1, wherein a front side (46) of the melt flow distributor device (34) is flush with the nozzle outlet (38).

3. Multi-component extrusion die head according to one of claims 1 or 2, wherein a mounting element (35) which can be reached from the nozzle outlet (38) is provided in the melt flow distributor device (34), and wherein the melt flow distributor device (34) can be removed from the extrusion nozzle (29) after releasing the mounting element (35).

4. Multi-component extrusion die head according to claim 3, wherein the melt flow distributor device (34) is mounted to the main die head (18) by means of the mounting element (35) and a mounting rod (36) passed through the extrusion nozzle (29).

5. Multi-component extrusion die head according to one of claims 1 - 4, wherein the melt flow distributor device (34) has at least one melt distributor (51), which is configured for splitting the first melt flow (16) in the peripheral direction (U16) thereof.

6. Multi-component extrusion die head according to claim 5, wherein the at least one melt distributor (51) has a front edge (52) as well as two side walls (53, 54) extending from the front edge (52) in the conveying direction (F) away from one another.

7. Multi-component extrusion die head according to claim 5 or 6, wherein the at least one melt distributor (51) has a rear wall (58) in the shape of an arc, in particular a circular arc.

8. Multi-component extrusion die head according to one of claims 5 - 7, wherein the melt flow distributor device (34) has at least one bore (50), which is configured for supplying the second melt flow (17) to the split first melt flow (16).

9. Multi-component extrusion die head according to claim 8, wherein the at least one bore (50) passes through the at least one melt distributor (51) at least in sections.

10. Multi-component extrusion system (12) with a multi-component extrusion die head (13) according to one of claims 1 - 9, a main extruder (14) for supplying the first melt flow (16) to the main die head (18) and an ancillary extruder (15) for supplying the second melt flow (17) to the main die head (18).

11. Method for producing a composite tube (1) by means of a multi-component extrusion die head (13), comprising the steps:
supplying (S1) a first melt flow (16) and a second melt flow (17) to an extrusion nozzle (29) by means of a main die head (18),
separately guiding (S2) the first melt flow (16) and the second melt flow (17) in the extrusion nozzle (29) in a conveying direction (F) oriented away from the main die head (18) in the direction of a nozzle outlet (38) of the extrusion nozzle (29),
splitting (S3) the first melt flow (16) in a peripheral direction (U16) thereof by means of a melt flow distributor device (34) arranged in the extrusion nozzle (29) and outside the main die head (18), and
supplying (S4) the second melt flow (17) to the split first melt flow (16) by means of the melt flow distributor device (34) in such a way that at least one section (62, 63) of the second melt flow (17) is arranged within the first melt flow (16) in the peripheral direction (U16) **characterized in that** the melt flow distributor device (34) is arranged in or on the nozzle outlet (38).

12. Method according to claim 11, wherein the at least one section (62, 63) of the second melt flow (17) is arranged between two sections (60, 61) of the first melt flow (16) in the peripheral direction (U16).

13. Method according to claim 12, wherein the first melt flow (16) has a plurality of sections (60, 61) and the second melt flow (17) has a plurality of sections (62, 63), and wherein the sections (60, 61) of the first melt flow (16) and the sections (62, 63) of the second melt flow (17) are arranged alternately in the peripheral direction (U16) in such a way that one section (60, 61) of the first melt flow (16) is always arranged between two sections (62, 63) of the second melt flow (17) and vice versa.

14. Method according to claim 12 or 13, wherein the first melt flow (16) is split in such a way and the second melt flow (17) is supplied to the split first melt flow (16) in such a way that the sections (60, 61, 62, 63) of the first melt flow (16) and of the second melt flow (17) respectively extend in a radial direction (R1) of the composite tube (1) over a total wall thickness (W) thereof.

## Revendications

1. Tête d'extrusion à plusieurs composants (13) pour la fabrication d'une tuyau composite (1), ayant une buse d'extrusion (29), une tête de pulvérisation de base (18), qui est agencée pour alimenter la buse d'extrusion (29) avec un premier courant de matière fondue (16) et un deuxième courant de matière fondue (17), le premier courant de matière fondue (16) et le deuxième courant de matière fondue (17) étant conduits de manière séparée dans la buse d'extrusion (29) dans une direction d'alimentation (F) qui est orientée de la tête d'extrusion de base (18) en direction d'une sortie de buse (38) de la buse d'extrusion (29), et un dispositif de distribution de courant de manière fondue (34) disposé dans la buse d'extrusion (29) et à l'extérieur de la tête d'extrusion de base (18), agencé pour distribuer le premier courant de manière fondue (16) en direction de sa circonférence (U16) et agencé pour fournir le deuxième courant de manière fondue (17) au premier courant de matière fondue (16) distribué, de telle manière qu'au moins une section (62, 63) du deuxième courant de matière fondue (17) soit disposé dans la direction de circonférence (U16) à l'intérieur du premier courant de matière fondue (16), **caractérisé en ce que** le dispositif de distribution de courant matière fondue (34) est disposé dans ou au niveau de la sortie de buse (38).

2. Tête d'extrusion à plusieurs composants selon la revendication 1, dans laquelle un côté avant (46) du dispositif de distribution de courant de matière fondue (34) se termine au ras de la sortie de buse (38).

3. Tête d'extrusion à plusieurs composants selon la revendication 1 ou 2, dans laquelle un élément de fixation (35) atteignable par la sortie de buse (38) est prévu dans le dispositif de distribution de courant de matière fondue (34) et dans laquelle le dispositif de distribution de courant de matière fondue (34) peut être retiré de la buse d'extrusion (29) après le détachement de l'élément de fixation (35).

4. Tête d'extrusion à plusieurs composants selon la revendication 3, dans laquelle le dispositif de distribution de courant de matière fondue (34) est tendu avec la tête d'extrusion de base (18) au moyen de l'élément de fixation (35) et d'une tige de fixation (36) passée à travers la buse d'extrusion (29).

5. Tête d'extrusion à plusieurs composants selon l'une des revendications 1 à 4, dans laquelle le dispositif de distribution de courant de matière fondue (34) présente au moins un diviseur de matière fondue (51) qui est agencé pour répartir le premier courant de matière fondue (16) dans la direction de sa circonférence (U16).

6. Tête d'extrusion à plusieurs composants selon la revendication 5, dans laquelle le ou les diviseur(s) de matière fondue (51) présente un bord avant (52) ainsi que deux parois latérales (53, 54) s'éloignant l'une de l'autre à partir du bord avant (52) dans la direction d'alimentation (F).

7. Tête d'extrusion à plusieurs composants selon la revendication 5 ou 6, dans laquelle le ou les diviseur(s) de matière fondue (51) présente une paroi arrière réalisée en forme d'arc, en particulier en forme d'arc de cercle.

8. Tête d'extrusion à plusieurs composants selon l'une des revendications 5 à 7, dans laquelle le dispositif de distribution de courant de matière fondue (34) présente au moins un perçage (50), qui est agencé pour fournir le deuxième courant de matière fondue (17) au premier courant de matière fondue (16) distribué.

9. Tête d'extrusion à plusieurs composants selon la revendication 8, dans laquelle la ou les perçage(s) (50) passe(nt) au moins par sections à travers le ou les diviseur(s) de matière fondue (51).

10. Installation d'extrusion à plusieurs composants (12) comportant une tête d'extrusion à plusieurs composants (13) selon l'une des revendications 1 à 9, une extrudeuse principale (14) pour amener le premier courant de matière fondue (16) à la tête d'extrusion de base (18) et une extrudeuse (15) pour amener le deuxième courant de matière fondue (17) à la tête d'extrusion de base (18).

11. Procédé pour la fabrication d'un tuyau composite (1) à l'aide d'une tête d'extrusion à plusieurs composants (13), comportant les étapes suivantes consistant à :
amener (S1) un premier courant de matière fondue (16) et un deuxième courant de matière fondue (17) à une buse d'extrusion (29) à l'aide d'une tête d'extrusion de base (18),
amener (S2) séparément le premier courant de matière fondue (16) et le deuxième courant de matière fondue (17) dans une direction d'alimentation (F), qui est orientée de la tête d'extrusion de base (18) vers une sortie de buse (38) de la buse d'extrusion (29), dans la buse d'extrusion (29),
distribuer (S3) le premier courant de matière fondue (16) dans sa direction de circonférence (U16) à l'aide d'un dispositif de distribution de courant de matière fondue (34) disposé dans la buse d'extrusion (29) et à l'extérieur de la tête d'extrusion de base (18) et
amener (S4) le deuxième courant de matière fondue (17) au premier courant de matière fondue (16) distribué à l'aide du dispositif de distribution de courant de matière fondue (34) de telle manière qu'au moins une section (62, 63) du deuxième courant de matière fondue (17) soit disposée dans la direction de circonférence (U16) à l'intérieur du premier courant de matière fondue (16),
**caractérisée en ce que** le dispositif de distribution de courant de matière fondue (34) est disposé dans ou au niveau de la sortie de buse (38).

12. Procédé selon la revendication 11, dans lequel au moins une section (62, 63) du deuxième courant de matière fondue (17) est disposée dans la direction de circonférence (U16) entre les deux sections (60, 61) du premier courant de matière fondue (16).

13. Procédé selon la revendication 12, dans lequel le premier courant de matière fondue (16) présente une multiplicité de sections (60, 61) et le deuxième courant de matière fondue (17) présente une multiplicité de sections (62, 63) et dans lequel les sections (60, 61) du premier courant de matière fondue (16) et les sections (62, 63) du deuxième courant de matière fondue (17) sont disposés alternativement dans la direction de circonférence (U16) de telle manière qu'est toujours disposée une section (60, 61) du premier courant de matière fondue (16) entre deux sections (62, 63) du deuxième courant de matière fondue (17) et inversement.

14. Procédé selon la revendication 12 ou 13, dans lequel le premier courant de matière fondue (16) est divisé de telle manière, et le deuxième courant de matière fondue (16) est fourni au premier courant de matière fondue (16) divisé de telle sorte, que les sections (60, 61, 62, 63) du premier courant de matière fondue (16) et du deuxième courant de matière fondue (17) s'étendent dans une direction radiale (R1) du tuyau composite (1) à chaque fois sur une épaisseur de paroi (W) totale de celui-ci.
